# EUROPEAN PATENT APPLICATION

(11) **EP 2 736 149 A1**
(43) Date of publication of application: **28.05.2014**
(21) Application number: 12194043.1
(22) Date of filing: 23.11.2012
(51) Int. Cl.: H02K 1/18

(54) **Stator segment for an electrical machine**

(71) Applicant: ABB Technology AG, 8050 Zürich (CH)
(72) Inventor: Okai, Ricardo-Naoki, 5442 Fislisbach (CH)
(74) Representative: ABB Patent Attorneys

(57) **Abstract**

The purpose of the invention is to radially fix a key bar (2) connecting a stator core and a stator frame of an electrical machine with respect to a radial gap without the need to make adaptions before operating. Stator comprises a spring element (6), which spring element (6) pushes or pulls the key bar (2) radially to support the radial gap (3).

## Description

### TECHNICAL FIELD

The invention relates to the field of electrical machines, and in particular to a stator segment for a rotating electrical machine.

### BACKGROUND OF THE INVENTION

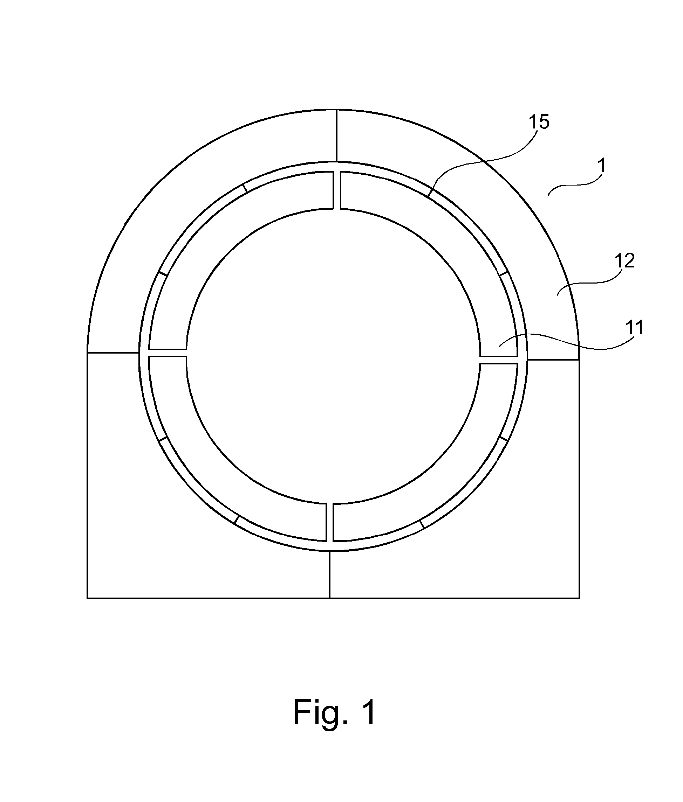

An electrical machine comprises a stator and a rotor. The stator comprises a stator core, stator windings, and a stator frame. The stator windings are arranged adjacent to the stator core and induce a magnetic field in the stator core (motor operation mode) or receive an induced current due to change in the magnetic field (generator operation mode). The stator frame is connected to the stator core and supports the stator core. The stator can comprise one or more stator segments allowing for an easier transportation. Fig. 1 shows a stator 1 from the state of the art in a front view in axial direction. The stator 1 comprises four stator frame segments 12 which stator frame segments 12 form the stator frame. Each stator frame segment 12 is connected to the neighboring stator frame segments. Stator core segments 11 are arranged radially inside the stator frame segments 12. Stator core segments 11 are connected to the stator frame segments 12 via connections 15. The rotor comprises poles which poles follow a rotating magnetic field of the stator (motor operation mode) or create a rotating magnetic field due to the mechanical motion (generator operation mode). There is a thermal expansion of the stator core during operations due to thermal heat generation caused by electrical resistance inside the stator core. Therefore it is necessary to have a support of the stator core that allows for radial motion of the stator core.

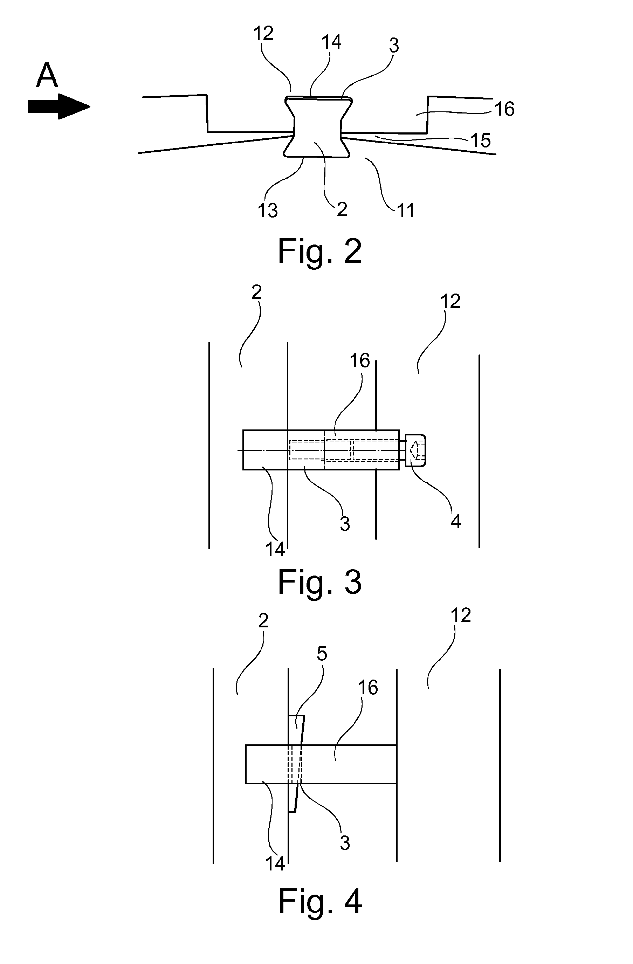

This is generally solved with a connection between stator core and the stator frame comprising a key bar and a radial gap between the key bar and the stator frame or the key bar and the stator core. The radial gap allows for radial motion of the stator core and the key bar. Fig. 2 shows a single connection 15 between a stator core segment 11 and a stator frame segment 12 with a key bar 2 and a radial gap 3 from the state of the art in front view in axial direction. A number of such connections 15 are distributed over a circumference of the stator core of a machine. The stator core segment 11 has a core cut out 13 with a dove tail shape. The stator frame segment 12 comprises a extension plate 16 and has a frame cut out 14 radially opposite of the core cut out 13. The frame cut out 14 has a first radially outwards section with a dove tail shape and a second radially inwards section with a rectangular shape. The key bar 2 is inserted into the core cut out 13 and the frame cut out 14. The shape of the key bar 2 fits the shape of core cut out 13 and the frame cut out 14 but leaves the radial gap 3 between the key bar 2 and the frame cut out 14. The gap could also be between the key bar and the core cut out. In such case the rectangular section of the frame cut out is not necessary and instead the core cut out has a rectangular section in addition to the dove-tail section and radially outwards from the dove-tail section. There could be also two gaps, a first gap between the key bar and the frame cut out and a second gap between the key bar and the core cut out. In this case both the frame cut out and core cut out comprise a rectangular section in addition to the dove-tail section. The connection can extend over the complete axial length of the machine or only over parts of the axial length. The stator core segments comprise thin metal stator laminations or sheets which stator laminations are stacked on top of each other. In order to allow for an accurate stacking of the stator laminations and prevent a misalignment of the stator laminations during transportation the key bar is used as a positioning reference in radial and tangential direction. Thus it is necessary to prevent radial motion of the key bar during stacking and transportation on the one hand and to allow for radial motion of the key bars during the operations on the other hand.

It is known from the state of the art to radially fix or immobilize the key bar with respect to the radial gap using a screw or a wedge. Fig. 3 shows a key bar 2 inserted into a frame cut out 14 which key bar 2 is fixed using a screw 4 in a schematic representation of an axial section corresponding to direction A from Fig. 2. There is a radial gap 3 between the key bar 2 and the frame cut out 14. The stator frame segment 12 comprises a hole which hole extents radially outwards from the frame cut out 14 and comprises a thread. The screw 4 with a diameter corresponding to the thread of the hole has a length which length is equal or greater than the distance from the radially outwards end of the key bar 2 to the radially outward end of the hole when the radial gap 3 is at maximum width. The screw 4 is tightened in the hole so that the radially inwards end of the screw 4 pushes the key bar 2 radially inwards and keeps the radial gap 3 at maximum width. Fig. 4 shows a key bar 2 inserted into a frame cut out 14 which key bar 2 is fixed using a wedge 5 in a schematic representation of an axial section corresponding to direction A from Fig. 2. The wedge 5 has a minimal thickness which minimal thickness is smaller or equal than the maximal width of the radial gap 3 and a maximal thickness which maximal thickness is greater than the maximal width of the radial gap 3. The screw 4 and the wedge 5 have to be removed before operating the electrical machine in order to allow for radial motion of the stator core during operation of the machine.

### BRIEF SUMMARY OF THE INVENTION

It is an objective of the invention to radially fix a key bar connecting a stator core and a stator frame of an electrical machine with respect to a radial gap without the need to make adaptions before operating.

This objective is achieved by a stator segment according to claim 1. Preferred embodiments are evident from the dependent patent claims.

According to the invention a stator comprises one or more stator segments. A stator segment comprises a stator core segment and a stator frame segment. The stator core segment comprises stator laminations. The stator core segments and the stator frame segment are connected via a key bar. The key bar is arranged inside a core cut out and a frame cut out. The key bar has a shape that results in a positive locking in radial direction between the key bar and the stator core segment and the key bar and the stator frame segment. There is a radial gap between the key bar and the core cut out and or the key bar and the frame cut out. There is a spring element that pushes or pulls the key bar to maintain the radial gap. Thus the radial gap is fixed without the need to make adaptions before operating.

In a first preferred embodiment the spring element is designed such that a force from the spring element pushing or pulling the key bar is greater than the stacking forces that occur during the stacking of the stator laminations but the force from the spring element is smaller than the expansion forces that occur during a thermal expansion in operation.

In a further preferred embodiment the spring element is designed such that a force from the spring element pushing or pulling the key bar is greater than the forces that occur during the assembly, transportation and erection of the stator segment but the force from the spring element is smaller than the expansion forces.

### BRIEF DESCRIPTION OF THE DRAWINGS

The subject matter of the invention will be explained in more detail in the following paragraph with reference to preferred exemplary embodiments which are illustrated in the attached drawings, which show:
- Figure 1: a stator from the state of the art with stator core and stator frame each comprises four segments;
- Figure 2: a connection between a stator core and a stator frame from the state of the art with a key bar and a radial gap;
- Figure 3: a fixation of a key bar from the state of the art using a screw;
- Figure 4: a fixation of a key bar from the state of the art using a wedge; and
- Figure 5: a fixation of a key bar using a leaf spring according to the invention;

### DETAILED DESCRIPTION OF THE INVENTION

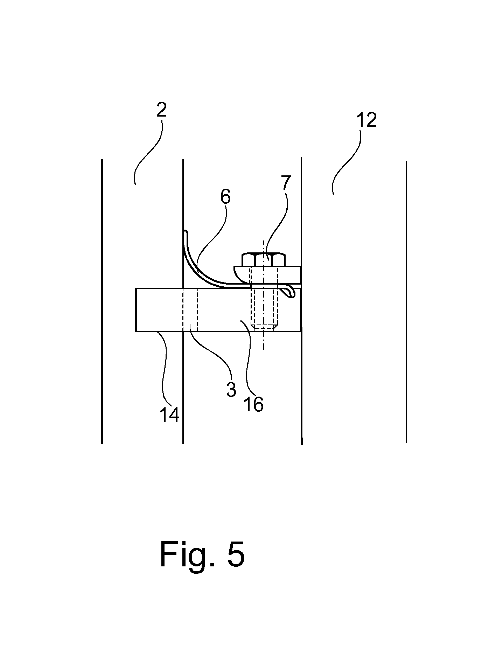

Fig. 5 shows a key bar 2 inserted into a frame cut out 14 which key bar 2 is fixed using a leaf spring 6 in a schematic representation of an axial section corresponding to direction A from Fig. 2. The leaf spring 6 is fixed to the frame cut out 14 on one end with a fastening mean 7 like a screw or a rivet. The other end of the leaf spring 9 bends in axial direction and pushes the key bar 2 radially inside into a dove-tail section of the frame cut out 14 to maintain a radial gap 3 between the key bar 2 and the frame cut out 14.

The radial gap could be between the key bar and a core cut out. In the case the spring element 6 pushes the key bar 2 radially outside into a dove-tail section of the core cut out 13 to maintain a radial gap 3 between the key bar 2 and the core cut out 13. Other spring elements like spiral spring or a disk spring can be used. The spring element can be arranged at other positions like in the radial gap or inside a cavity of the key bar or inside a cavity of the stator frame. It is possible to hold the spring element in place using welding, bonding or a frictional connection. Different forms are possible for the key bar and the frame cut out as long as there is a positive locking between the key bar and the frame cut out.

### LIST OF REFERENCE NUMERALS

- 1: stator
- 11: stator core segment
- 12: stator frame segment
- 13: core cut out
- 14: frame cut out
- 15: connection between stator core and stator frame
- 16: extension plate
- 2: key bar
- 3: radial gap
- 4: screw
- 5: wedge
- 6: spring element
- 7: fastening mean

## Claims

1. Stator segment for a stator of an electrical machine, the stator segment comprising a stator core segment (11), which stator core segment (11) comprises a stack of stator laminations and a core cut out (13) in a radially outwards section, a stator frame segment (12), which stator frame segment (12) is arranged radially outward around the stator core segment (11) with a frame cut out (14) in a radially inner section opposite of the core cut out (13) supporting the stator core segment (11), and a connection (15) between the stator core segment (11) and the stator frame segment (12), which connection (15) comprises a key bar (2), which key bar (2) is arranged in axial direction of the stator inside the core cut out (13) and the frame cut out (14) and connects the stator core segment (11) and the stator frame segment (12) by means of a positive locking that exist between the key bar (2) and the core cut out (13) as well as between the key bar (2) and the frame cut out (14), wherein there is a radial gap (3) between the key bar (2) and the frame cut (14) out and or between the key bar (2) and the core cut out (13) allowing a radial motion of the stator core, **characterized in that,** the stator comprises a spring element (6), which spring element (6) pushes or pulls the key bar (2) radially to support the radial gap (3).

2. Stator segment according to claim 1, **characterized in that,** the spring element (6) is dimensioned such that it opposes radial motion of the key bar (2) during stacking of the stator laminations and facilitates radial motion of the key bar (2) during operations.

3. Stator segment according to claim 2, **characterized in that,** the spring element (6) is dimensioned such that it prevents radial motion of the key bar (2) during assembly, transportation and erection of the stator segment.

4. Stator segment according to one of the claims 1 to 3, **characterized in that,** the spring element (6) is arrange on the stator frame segment (12), on the key bar (2) or between the stator frame segment (12) and the key bar (2).

5. Stator segment according to one of the claims 1 to 4, **characterized in that,** the spring element (6) is a leaf spring.

6. Stator comprising a stator segment according to one of the claims 1 to 5.

7. Electrical machine comprising a stator according to claim 6.
